Europäisches Patentamt

European Patent Office

Office européen des brevets

(19)

(11) Veröffentlichungsnummer: **0 283 794 B1**

(12) **EUROPÄISCHE PATENTSCHRIFT**

(45) Veröffentlichungstag der Patentschrift: **20.05.92**

(51) Int. Cl.5: **B01D 53/34**, B01J 10/00

(21) Anmeldenummer: **88103339.3**

(22) Anmeldetag: **04.03.88**

(54) **Verfahren und Vorrichtung zur Durchführung von Gas/Flüssigkeits-Reaktionen.**

(30) Priorität: **11.03.87 DE 3707823**

(43) Veröffentlichungstag der Anmeldung:
**28.09.88 Patentblatt 88/39**

(45) Bekanntmachung des Hinweises auf die
Patenterteilung:
**20.05.92 Patentblatt 92/21**

(84) Benannte Vertragsstaaten:
**DE ES FR GB IT NL**

(56) Entgegenhaltungen:
EP-A- 0 011 517     DE-A- 3 011 886
DE-A- 3 216 158     FR-A- 2 491 773
GB-A- 1 400 632     US-A- 4 166 790

(73) Patentinhaber: **Linde Aktiengesellschaft**
**Abraham-Lincoln-Strasse 21**
**W-6200 Wiesbaden(DE)**

(72) Erfinder: **Hofer, Helmut, Dr.-Ing.**
**Max-Nadler-Strasse 5**
**W-8000 München 81(DE)**

(74) Vertreter: **Schaefer, Gerhard, Dr.**
**Linde Aktiengesellschaft Zentrale Patentab-**
**teilung**
**W-8023 Höllriegelskreuth(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zur Entfernung von Schwefelwasserstoff aus solchen enthaltenden Gasgemischen durch Wäsche mit einer wäßrigen, alkalischen, fünfwertiges Vanadin als Oxidationsmittel enthaltenden Waschlösung, wobei der Schwefel des Schwefelwasserstoffs in höhere Oxidationsstufen bei gleichzeitiger Reduktion des fünfwertigen in das vierwertige Vanadin übergeht, wonach die Waschlösung in einem nachgeschalteten Oxideur durch Begasen mit einem sauerstoffhaltigen Gas zur Rückoxidation des vierwertigen Vanadins regeneriert und wiederverwendet wird.

Ein derartiges Verfahren wird beispielsweise in der DE-A-32 16 158 beschrieben.

Bei der Durchführung von Reaktionen zwischen Gasen und Flüssigkeiten, wie z.B. beim eingangs beschriebenen Gaswaschprozess, ergeben sich immer wieder Schwierigkeiten, wenn eines oder mehrere Reaktionsprodukte in fester Form anfallen. Gewöhnlich laufen derartige Gaswaschprozesse in mit Füllkörpern ausgestatteten Kolonnen ab, die eine möglichst innige Vermischung des Gases mit der Flüssigkeit gewährleisten. Wenn auch die Reaktionsprodukte nur entweder gasförmig oder flüssig anfallen, dann sind derartige Füllkörperkolonnen für Waschverfahren erfahrungsgemäß hervorragend geeignet. Schwierigkeiten treten jedoch bei Feststoffausfällungen auf, da die Feststoffe die Zwischenräume zwischen den Füllkörpern verlegen und den Durchgangswiderstand für Gase und Flüssigkeiten mit der Zeit stark erhöhen.

Gerade bei Gaswäschen, bei denen die auszuwaschenden Verunreinigungskomponenten mit dem Waschmittel eine chemische Reaktion eingehen, die gegebenenfalls zum Ausfallen von Feststoffen führt, ist es unabdingbar, daß zur Erzielung der gewünschten Gasreinheit große Phasengrenzflächen zwischen Gas und Flüssigkeit angeboten werden. Diese werden bei den bekannten Kolonnen für diesen Zweck durch die eingebrachten Füllkörper geschaffen, die aber durch Verlegungen durch Feststoffe stark gefährdet sind, da dann die Größe der Phasengrenzfläche stark zurückgeht.

Die beschriebenen Schwierigkeiten treten insbesondere beim eingangs beschriebenen Gaswaschverfahren auf.

Beim eingangs beschriebenen Verfahren wird das zu reinigende Gas mit einer wäßrigen alkalischen Lösung, wie z.B. einer Natriumcarbonat-Lösung mit einem pH-Wert zwischen 7,5 und 9, gewaschen, die ein lösliches Salz, wie das Natriumsalz der Anthrachinondisulfonsäure und ein Metallvanadat enthält, wobei das Vanadin in der fünfwertigen Oxidationsstufe vorliegt. Der absorbierte Schwefelwasserstoff dissoziiert in der Lösung unter Bildung von negativen HS-Ionen, die das Vanadin zum vierwertigen Vanadin reduzieren, wobei elementarer Schwefel freigesetzt wird. Das reduzierte Vanadin kann dann durch eine Oxidationsreaktion mit einem sauerstoffhaltigen Gas in Gegenwart von Anthrachinondisulfonsäure rückoxidiert werden.

Der bei diesem Gasreinigungsverfahren entstehende elementare Schwefel führt bei Verwendung der bekannten Füllkörperkolonnen alsbald zu Verlegungen, was den Betrieb beeinträchtigt.

Der Erfindung liegt daher die Aufgabe zugrunde, ein Verfahren und eine Vorrichtung zu schaffen, die es ermöglichen, Gaswaschreaktionen im beschriebenen Gasreinigungsverfahren mit Feststoffausfällung ohne die bei den bekannten Apparaturen hierbei beobachteten Nachteile durchzuführen.

Diese Aufgabe wird erfindungsgemäß dadurch gelöst, daß die Wasche in einem Blasensäulen-Reaktor durchgeführt wird.

Es hat sich nämlich überraschenderweise gezeigt, daß Blasensäulen-Reaktoren für Reaktionen, bei denen Feststoffe anfallen, vorteilhafter einsetzbar sind als die üblichen Füllkörperkolonnen. Diese Vorteile sind zurückzuführen auf die hohe Verschmutzungsunempfindlichkeit von Blasensäulen-Reaktoren, den darin erzielbaren guten Stoffübergang und die hohe Flüssigkeitsverweilzeit.

Für die Wäsche eignen sich daher Blasensäulen-Reaktoren in hervorragender Weise, da sie gegen Feststoffe unempfindlich sind, große Phasengrenzflächen zur Stoffübertragung darbieten und hohe Verweilzeiten des Gases und der Flüssigkeit erlauben.

Die Erfindung betrifft außerdem eine Vorrichtung zur Durchführung des eingangs beschriebenen Verfahrens. Erfahrungsgemäß ist diese Vorrichtung als Blasensäulen-Reaktor ausgebildet.

Im einfachsten Fall genügt erfindungsgemäß ein Blasensäulen-Reaktor mit einem Siebboden oder einer siebbodenähnlichen Konstruktion, über die das zu reinigende Gas eingeführt wird. Zur Erlangung einer höheren Gasreinheit wird der Blasensäulen-Reaktor erfindungsgemäß am Boden mit Ejektoren ausgestattet, durch die ein Teil der zur Reinigung des Gases erforderlichen Naschflüssigkeit unter Druck in den Reaktionsraum eingebracht wird.

Zum Zwecke einer größeren Durchmischung von Gas und Flüssigkeit ist erfindungsgemäß vorgesehen, die Blasensäulen-Reaktoren zusätzlich gegebenenfalls mit Kreiselbelüftern auszustatten.

Die erfindungsgemäßen Blasensäulen-Reaktoren haben einen im Verhältnis zur Füllhöhe der Flüssigkeit mehrfach größeren Durchmesser. Erfindungsgemäß muß das Verhältnis des Durchmessers des Reaktors zur Füllstandshöhe der Flüssigkeit größer als 1,5 sein. Das hat den ganz entscheidenden Vorteil, daß große Gasmengen umgesetzt werden können, wobei gleichzeitig die durch den hydrostatischen Druck der Flüssigkeit bedingten Druckverluste klein gehalten werden können.

So können die Durchmesser der erfindungsgemäßen Blasensäulen-Reaktoren unter einem Druck von 1,1 bar bei einem Gasdurchsatz von 10.000 $Nm^3/h$ etwa 8 m, bei einem Durchsatz von 100.000 $Nm^3/h$ etwa 25 m betragen.

Die erfindungsgemäßen Blasensäulen-Reaktoren lassen sich aber mit Vorteil auch für Gasreinigungen bei höheren Drücken einsetzen, z.B. für die Erdgasreinigung. Gegebenenfalls könnte hier sogar auf die Grobreinigung mit einem Venturisystem verzichtet werden und die gesamte Auswaschung im Blasensäulen-Reaktor erfolgen.

Die Erfindung sei nunmehr anhand zweier schematisch dargestellter Ausführungsbeispiele noch näher erläutert.

Dabei zeigen:

Figur 1 einen einfachen Blasensäulen-Reaktor gemäß der Erfindung und

Figur 2 einen Blasensäulen-Reaktor gemäß der Erfindung mit Ejektordüsen.

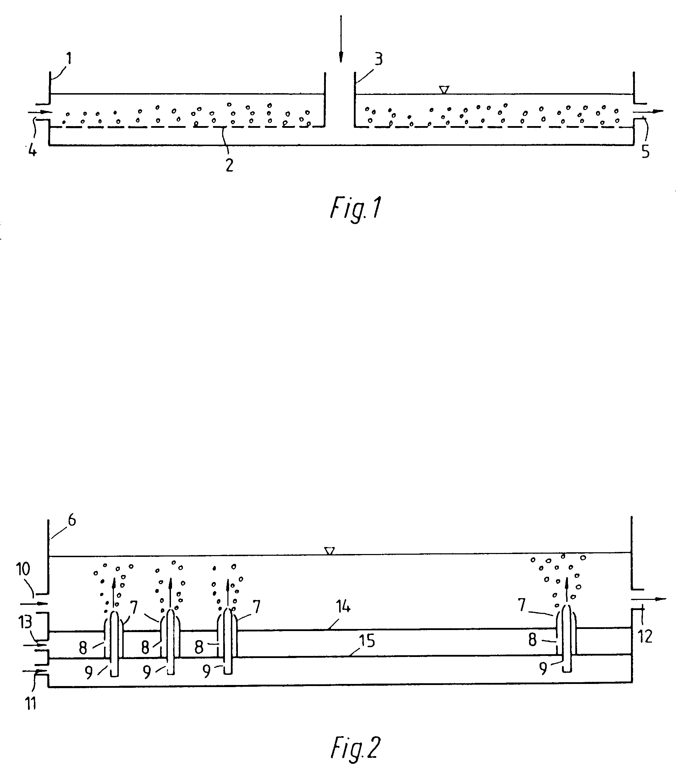

In Figur 1 ist der Blasensäulen-Reaktor 1 mit einem in einem geringen Abstand über seinem Boden angeordneten Siebboden 2 versehen, der mit einem zentralen Gaszuführungsrohr 3 ausgestattet ist. Der andere Reaktionsteilnehmer, die Flüssigkeit, wird über ein Flüssigkeitszuführrohr 4 zugeführt und über 5 abgeführt.

Für die Feinreinigung eines vorgereinigten Rauchgases mit 99,9 Vol-% $CO_2$ und 0,1 % $H_2S$ auf einen $H_2S$-Gehalt von 2 ppm würden 100.000 $Nm^3/h$ Gas bei einem Druck von 1,1 bar mit einem Waschmittel mit 25 bis 40 g/l $Na_2O_3$ und 1,5 g/l $V_2O_5$ behandelt. Der erfindungsgemäße Blasensäulen-Reaktor würde bei diesem Auslegungsbeispiel einen Durchmesser von 25 m bei einer Flüssigkeitshöhe von 75 cm haben.

In Figur 2 ist ein erfindungsgemäßer Blasensäulen-Reaktor 6 mit einer Mehrzahl von Ejektoren 7 ausgestattet. Die Ejektoren 7 sind mit Gaseintrittsöffnungen 8 und Flüssigkeitsöffnungen 9 versehen. Die Flüssigkeit wird dem Blasensäulen-Reaktor 6 über die Leitungen 10 und 11 zugeführt, wobei die Flüssigkeit in der Leitung 11 einen etwas höheren Druck haben muß als die in der Leitung 10. Die Flüssigkeitsabfuhr erfolgt über Leitung 12. Das Reaktionsgas wird über Leitung 13 zugeführt. Ansonsten sind die Gas- und Flüssigkeitsräume des Reaktors 6 mit Hilfe durchgehender Böden 14 und 15 voneinander getrennt. Die Ejektoren 7 arbeiten in bekannter Weise, d.h. das durch die Öffnungen 13 und 8 eindringende Gas wird durch die unter höherem Druck über 11 und 9 zugeführte Flüssigkeit nach oben in den oberhalb des Bodens 14 befindlichen Flüssigkeitsraum mitgerissen.

Die Ausführungsform gemäß Figur 2 sei für die Grobreinigung von 100.000 $Nm^3/h$ Rauchgas mit 99 Vol-% $CO_2$ und 1 Vol-% $H_2S$ eingesetzt. Das Gas, das einen Druck von 1,3 bar hat, wird mit einem Waschmittel behandelt, das 25 bis 40 g/l $Na_2CO_3$ und 1,5 g/l $V_2O_5$ enthält. Das Gas verläßt den Blasensäulen-Reaktor mit einem $H_2S$-Gehalt von 5 ppm. Die durch 10 zugeführte Flüssigkeit hat einen Druck von 1,2 bar, die durch Leitung 11 zugeführte einen solchen von 1,5 bar. Für den angegebenen Durchsatz von 100.000 $Nm^3/h$ hat der Blasensäulen-Reaktor der Figur 2 einen Durchmesser von 25 m und wird mit einer Flüssigkeitshöhe von etwa 150 cm betrieben.

## Patentansprüche

1. Verfahren zur Entfernung von Schwefelwasserstoff aus solchen enthaltenden Gasgemischen durch Wäsche mit einer wäßrigen, alkalischen, fünfwertiges Vanadin als Oxidationsmittel enthaltenden Waschlösung, wobei der Schwefel des Schwefelwasserstoffs in höhere Oxidationsstufen übergeht bei gleichzeitiger Reduktion des fünfwertigen in das vierwertige Vanadin, wonach die Waschlösung in einem nachgeschalteten Oxydeur durch Begasen mit einem sauerstoffhaltigen Gas zur Rückoxidation des vierwertigen Vanadins regeneriert und wiederverwendet wird, **dadurch gekennzeichnet,** daß die Wäsche in einem Blasensäulen-Reaktor durchgeführt wird.

2. Verfahren nach Anspruch 1, dadurch gekennzeichnet, daß dem Blasensäulen-Reaktor das Gasgemisch und die Waschlösung in einem Verhältnis zugeführt werden, daß die Waschlösung mit maximal 250 bis 400 mg/l Schwefel beladen wird.

3. Verfahren nach den Ansprüchen 1 oder 2, dadurch gekennzeichnet, daß der Blasensäulen-Reaktor mit einer Gasleerrohrgeschwindigkeit von ca. 5 bis 7 cm/sec. betrieben wird.

4. Vorrichtung zur Durchführung der Verfahren nach den vorhergehenden Ansprüchen, dadurch gekennzeichnet, daß sie als Blasensäulen-Reaktor ausgebildet ist

5. Vorrichtung nach Anspruch 4, dadurch gekennzeichnet, daß der Blasensäulen-Reaktor mit einem selbstansaugenden Ejektor (Freistrahl-Reaktor) ausgestattet ist.

6. Vorrichtung nach Anspruch 4, dadurch gekennzeichnet, daß der Blasensäulen-Reaktor mit einem Kreiselbelüfter ausgestattet ist.

**7.** Vorrichtung nach einem der Ansprüche 4 bis 6, dadurch gekennzeichnet, daß der Blasensäulen-Reaktor einen vom Gasdurchsatz abhängigen inneren Durchmesser von 2 bis 28 m hat.

**8.** Vorrichtung nach den Ansprüchen 4 bis 7, dadurch gekennzeichnet, daß die Flüssigkeitshöhe im Blasensäulen-Reaktor 0,7 bis 2 m beträgt.

**9.** Vorrichtung nach den Ansprüchen 4 bis 8, dadurch gekennzeichnet, daß das Verhältnis des Durchmessers des Blasensäulen-Reaktors zur Flüssigkeitshöhe größer als 1,5 ist.

## Claims

**1.** A process for eliminating hydrogen sulphide from gas mixtures in which it is contained, by scrubbing with aqueous, alkaline, pentavalent vanadium as scrubbing solution containing an oxidizing agent, wherein the sulphur of the hydrogen sulphide is converted into higher oxidation stages with simultaneous reduction of the pentavalent vanadium into quadrivalent vanadium, whereupon the scrubbing solution is regenerated in a following oxidizing apparatus by exposure to a gas containing oxygen for the reoxidation of the quadrivalent vanadium and is re-used, characterised in that the scrubbing is carried out in a bubble column reactor.

**2.** A process as claimed in Claim 1, characterised in that the bubble column reactor is supplied with the gas mixture and the scrubbing solution in a ratio which is such that the scrubbing solution is charged with a maximum of 250 to 400 mg/l sulphur.

**3.** A process as claimed in Claims 1 or 2, characterised in that the bubble column reactor is operated at a empty pipe gas speed of approximately 5 to 7 cm/sec.

**4.** A device for the implementation of the processes claimed in the preceding claims, characterised in that it is designed as a bubble column reactor.

**5.** A device as claimed in Claim 4, characterised in that the bubble column reactor is equipped with a regenerative ejector (free jet reactor).

**6.** A device as claimed in Claim 4, characterised in that the bubble column reactor is equipped with a centrifugal blower.

**7.** A device as claimed in one of Claims 4 to 6, characterised in that the bubble column reactor has an internal diameter of 2 to 28 m in dependence upon the gas throughput.

**8.** A device as claimed in Claims 4 to 7, characterised in that the liquid level in the bubble column reactor amounts to 0.7 to 2 m.

**9.** A device as claimed in Claims 4 to 8, characterised in that the ratio of the diameter of the bubble column reactor to the liquid level is greater than 1.5.

## Revendications

**1.** Procédé de séparation d'$H_2S$ d'un mélange gazeux le contenant par lavage avec une solution aqueuse alcaline de vanadium pentavalent en tant que solution de lavage contenant l'oxydant, par lequel le soufre du $H_2S$ est amené à un état d'oxydation supérieur avec réduction concomitante du vanadium pentavalent en tétravalent, après quoi la solution de lavage est régénérée dans un oxydeur en aval par barbotage d'un gaz acide pour la réoxydation du vanadium tétravalent et est recyclée, caractérisé en ce que le lavage est mis en oeuvre dans un réacteur à injection de gaz.

**2.** Procédé selon la revendication 1, caractérisé en ce que le mélange gazeux et la solution de lavage sont envoyés dans le réacteur à injection de gaz avec un rapport tel que la solution de lavage est chargée au maximum de 250 à 400 mg/l de soufre.

**3.** Procédé selon la revendication 1 ou 2, caractérisé en ce que le réacteur à injection de gaz fonctionne avec une vitesse de gaz en fût vide à l'entrée d'environ 5 à 7 cm/sec.

**4.** Dispositif de mise en oeuvre du procédé selon l'une quelconque des revendications précédentes, caractérisé en ce qu'il se présente sous forme d'un réacteur à injection de gaz.

**5.** Dispositif selon la revendication 4, caractérisé en ce que le réacteur à injection de gaz est équipée d'un éjecteur à amorçage automatique (réacteur à jet libre).

**6.** Dispositif selon la revendication 4, caractérisé en ce que le réacteur à injection de gaz est équipée d'un gicleur circulaire.

7. Dispositif selon l'une des revendications 4 à 6, caractérisé en ce que le réacteur à injection de gaz a un diamètre interne, fonction du débit de gaz, de 2 à 28 m.

8. Dispositif selon l'une des revendications 4 à 7, caractérisé en ce que la hauteur d'écoulement dans le réacteur à injection de gaz est de 0,7 à 2 m.

9. Dispositif selon l'une des revendications 4 à 8, caractérisé en ce que le rapport du diamètre du réacteur à injection de gaz sur la hauteur d'écoulement est supérieur à 1,5.

Fig.1

Fig.2